# EUROPEAN PATENT APPLICATION

(11) **EP 3 550 871 A1**
(43) Date of publication of application: **09.10.2019**
(21) Application number: 18177941.4
(22) Date of filing: 15.06.2018
(51) Int. Cl.: H04W 24/04, H04W 88/08

(54) **CREATE BACKUP WIRELESS SERVICE**

(30) Priority: 08.04.2018 CN 201810307791
(71) Applicant: Hewlett Packard Enterprise Development L.P., Houston, TX 77070 (US)
(72) Inventor: RAN, Guangzhi, Chaoyang District, Beijing 100027 (CN); ZHOU, Qiang, Chaoyang District, Beijing 100027 (CN); HAN, Jianpo, Chaoyang District, Beijing 100027 (CN)
(74) Representative: Haseltine Lake Kempner LLP

(57) **Abstract**

An example first network device may include a processor to create a first wireless service for a client device, wherein the first wireless service corresponds to a second wireless service provided to the client device by a second network device operating on a first channel; retrieve a first information corresponding to the second wireless service provided by the second network device; monitor the first channel for the first information; update a second information corresponding to the first wireless service provided by the first network device based on the first information; and cause the first network device to provide the first wireless service to the client device in response to determining that the second wireless service provided by the second network device is unavailable to the client device.

## Description

### BACKGROUND

A network device may have an antenna system and a radio communicatively connected to the antenna system. Based on the radio operating on a specified channel, the network device may provide a wireless service, e.g. access service, to a client device. Before the wireless service being provided on the specified channel, the network device and the client device may associate with each other on the specified channel.

### BRIEF DESCRIPTION OF THE DRAWINGS

FIG. 1 is a block diagram illustrating an example wireless system according to present disclosure;
FIG. 2 is a block diagram illustrating another example wireless system according to present disclosure;
FIG. 3 is a block diagram illustrating another example wireless system according to present disclosure;
FIG. 4A to FIG. 4D are diagrams illustrating example cases of creating backup wireless service in the wireless system according to present disclosure;
FIG. 5 is a flow chart illustrating an example method of creating backup wireless service according to present disclosure;
FIG. 6 is a flow chart illustrating another example method of creating backup wireless service according to present disclosure;
FIG. 7A and FIG. 7B are flow charts illustrating another example method of creating backup wireless service according to present disclosure;
FIG. 8 is a flow chart illustrating another example method of creating backup wireless service according to present disclosure;
FIG. 9 is a block diagram illustrating an example network device according to present disclosure;
FIG. 10 is a block diagram illustrating another example network device according to present disclosure;
FIG. 11 is a block diagram illustrating another example network device according to present disclosure;
FIG. 12 is a block diagram illustrating another example network device according to present disclosure.

### DETAILED DESCRIPTION

The network device may provide a wireless service, e.g. a wireless network access service provided by a virtual access point (VAP) or a printing service provided by a wireless printer, to a client device. When the network device providing the wireless service is unavailable due to, for example, power loss, system crash, or reboot after upgrading, etc., the client device may select another network device for recovering the interrupted wireless service and re-associate with the selected another network device. During the client device re-association with the selected another network device, the traffic corresponding to the wireless service may be interrupted.

For example, in IEEE 802.11 Standard, during association, processes such as scanning service set identifier (SSID) or negotiating block acknowledgment (BA) agreement may be executed between the client device and the network device. The interruption time of the traffic corresponding the wireless service may be long, because those traffic has to wait for the completion of the re-association process.

In order to reduce or prevent the interruption, if the network device provides the wireless service for the client device, a backup wireless service may be created on a different network device. The operating channel of the backup wireless service may be the same as that of the network device currently providing the wireless service, and information of the backup wireless service may be duplicated and/or periodically updated from the currently provided wireless service, such as configuration information, association information, and state information (such as client device state information), etc.

If the network device becomes unavailable, the backup wireless service may be activated, and the same wireless service may be continuously provided to the client device via the backup wireless service, without interrupting the traffic due to re-association. Therefore, seamlessly switching to the different network devices allows for a high availability wireless service to be provided to the client device consuming the wireless service.

The network device, on which the backup wireless service is created, may also operate another active wireless service on a channel different from or same as the backup wireless service. In other words, the network device may provide an active wireless service for a wireless device, while maintaining a backup wireless service for another network device.

In one example, a first network device comprising a processor to create a first wireless service for a client device, wherein the first wireless service corresponds to a second wireless service provided to the client device by a second network device operating on a first channel; retrieve a first information corresponding to the second wireless service provided by the second network device; monitor the first channel for the first information; update a second information corresponding to the first wireless service provided by the first network device based on the first information; and cause the first network device to provide the first wireless service to the client device in response to determining that the second wireless service provided by the second network device is unavailable to the client device.

In another example, a method comprises creating, by a processor of a first network device, a first wireless service for a client device, wherein the first wireless service corresponds to a second wireless service provided to the client device by a second network device operating on a first channel; retrieving, by the processor, a first information corresponding to the second wireless service provided by the second network device; monitoring, by the processor, the first channel for the first information; updating, by the processor, a second information corresponding to the first wireless service provided by the first network device based on the first information; and causing, by the processor, the first network device to provide the first wireless service to the client device in response to determining that the second wireless service provided by the second network device is unavailable to the client device.

In another example, a non-transitory computer readable storage medium storing instructions that, when executed by a processor of a first network device, cause the processor to: create a first wireless service for a client device, wherein the first wireless service corresponds to a second wireless service provided to the client device by a second network device operating on a first channel; retrieve a first information corresponding to the second wireless service provided by the second network device; monitor the first channel for the first information; update a second information corresponding to the first wireless service provided by the first network device based on the first information; and cause the first network device to provide the first wireless service to the client device in response to determining that the second wireless service provided by the second network device is unavailable to the client device.

As used herein, a "network device" generally includes a device that is adapted to transmit and/or receive signaling and to process information within such signaling and to provide wireless local area network services to a station (e.g., any data processing equipment such as a computer, cellular phone, personal digital assistant, tablet devices, etc.) . The "network device" may include access points, data transfer devices, network switches, routers, controllers, etc.. As used herein, an "access point" (AP) generally refers to receiving points for any known or convenient wireless access technology which may later become known. Specifically, the term AP is not intended to be limited to IEEE 802.11-based APs. APs generally function as an electronic device that is adapted to allow wireless devices to connect to a wired network via various communications standards.

It is appreciated that examples described herein below may include various components and features. Some of the components and features may be removed and/or modified without departing from a scope of the device, method and non-transitory computer readable storage medium for. It is also appreciated that, in the following description, numerous specific details are set forth to provide a thorough understanding of the examples. However, it is appreciated that the examples may be practiced without limitations to these specific details. In other instances, well known methods and structures may not be described in detail to avoid unnecessarily obscuring the description of the examples. Also, the examples may be used in combination with each other.

Reference in the specification to "an example" or similar language means that a particular feature, structure, or characteristic described in connection with the example is included in at least one example, but not necessarily in other examples. The various instances of the phrase "in one example" or similar phrases in various places in the specification are not necessarily all referring to the same example. As used herein, a component is a combination of hardware and software executing on that hardware to provide a given functionality.

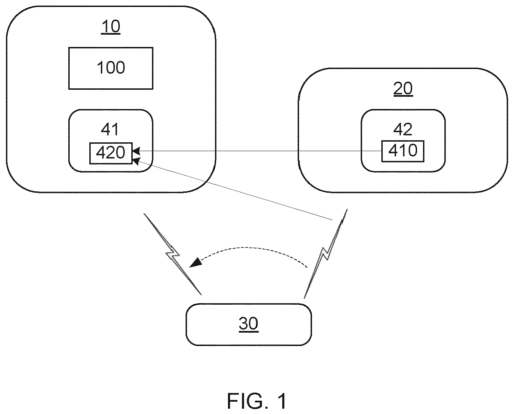

FIG. 1 is a block diagram illustrating an example wireless system according to present disclosure. Referring to FIG. 1, the wireless system, e.g. a wireless local area networks (WLAN), may include a first network device 10, e.g. an access point (AP), a second network device 20, e.g. another AP, and a client device 30. In some examples, the second network device 20 is a neighbor network device to the first network device 10. In one example, a neighbor network device may refer to any network device that can operate on a same channel as the first network device and physically located within a radio frequency coverage area of the first network device.

The client device 30 may be a smartphone, a mobile phone, a Personal Digital Assistant (PDA), a portable personal computer, an AIO (all-in-one) computing device, a notebook, a convertible or hybrid notebook, a netbook, a tablet, a cellular device, a desktop computer, a multimedia player, an entertainment unit, a data communication device, a portable reading device, or any other computing device capable of transmitting and receiving wireless transmissions and consuming a wireless service. Wireless service may include, for example, WLAN access, guest authentication, printing, projector, locationing, indoor wayfinding, asset tracking, security/threat monitoring and/or detection, user behavior modeling, loT (internet of things) connectivity, wireless user data analytics, edge data analytics, edge security, edge data collection, etc..

The network device 10 may include a processor 100. The processor 100 may create a first wireless service 41 for a client device 30, wherein the first wireless service 41 corresponds to a second wireless service 42 provided to the client device 30 by a second network device 20 operating on a first channel.

In some examples, the first wireless service 41 may be a backup for the second wireless service 42, and the first wireless service 41 and the second wireless service 42 may be provided on the first channel.

In some cases, there may be a plurality of candidate devices in the wireless system, and the first network device 10 may be selected from the plurality of candidate devices to create the first wireless service 42 by considering at least one of factors such as strength of signal, the number of available radio chains, the ability of monitoring the second network device 20, the load of the first network device 10 on the first channel, etc.. The processor 10 may create the first wireless service 42 in response to an indication that the first network device 10 is the selected one for providing a backup wireless service.

The processor 100 may retrieve a first information 410 corresponding to the second wireless service 42 provided by the second network device 20, e.g. the first information 410 may be synchronized via a secure channel, e.g. an internet protocol security (IPsec) channel.

In some cases, the retrieved first information 410 may include configuration information of the second wireless service 42, association information of the second wireless service 42 such as media access control (MAC) address, association identifier (AID), capabilities, rate set, etc., and state information of the second wireless service 42 such as beacon timestamp, sequence number, BA state/window, power save state, etc.. Optionally, the retrieved first information 410 may further include security association information, such as pairwise mask key (PMK), pairwise transient key (PTK), etc.

The processor 100 may monitor the first channel for the first information 410 , and may update a second information 420 corresponding to the first wireless service 41 provided by the first network device 10 based on the first information 410. For example, at least the changes of the state information included in the first information 410 may be monitored. Due to the updating based on the first information 410, the second information 420 may be maintained to be substantially the same with the first information 410.

The processor 100 may cause the first network device 10 to provide the first wireless service 41 to the client device 30 in response to determining that the second wireless service 42 provided by the second network device 20 is unavailable to the client device 30. For example, the processor 100 may activate the first wireless service 41 on the first network device 10, when the first network device 10 determines that the second wireless service 42 provided by the second network device 20 is unavailable.

In some cases, the processor 100 may further detect the state of the second wireless service 42 provided by the second network device 20, e.g. by receiving a signal indicating the state of the second wireless service 42 or by monitoring of the operating channel associated with the active second wireless service 42.

In one example, the processor 100 may further receive a signal indicating that the second wireless service 42 provided by the second network device 20 is unavailable to the client device 30.

For example, the second wireless service 42 is intentionally made unavailable due to reasons such as the upgrading of the second network device 20, etc. A control device may send the signal to the first network device 10, by considering factor such as a latency of transmitting the signal from the control device to the device 10, etc., and the first network device 10 may provide the first wireless service 41 to the client device 30 in response to receiving the signal sent by the control device, such that the wireless service provided to the client device 30 may be seamlessly switched from the second wireless service 42 to the first wireless service 41.

In another example, the processor 100 may further detect the activity of beacons on the channel associating with the second wireless service 42 provided by the second network device 20, so as to determine whether the second wireless service 42 provided by the second network device 20 is unavailable to the client device 30.

When a low activity or inactivity of the beacons corresponding to the second wireless service 42 advertised (or transmitted) by the second network device 20 is detected, the processor 100 may determine whether number of the received beacons from the second network device 20 providing the second wireless service 42 is lower than a threshold number, or determine whether a period of inactivity associated with the beacons from the second network device 20 providing the second wireless service 42 exceeds a threshold period. The activity or inactivity may be not determined based on time, and may be determined based on the number of the beacons.

For example, the activity may be detected by the first network device 10 (e.g. working as a sniffer) monitoring the channel associating with the second wireless service 42 provided by the second network device 20, or may be detected by the control device monitoring the second network device 20 providing the second wireless service 42 and notifying the first network device 10.

When the second wireless service 42 provided by the second network device 20 is unavailable, due to the activated first wireless service 41 provided by the first network device 10, the traffic to and from the client device 30 may be prevented from interrupted.

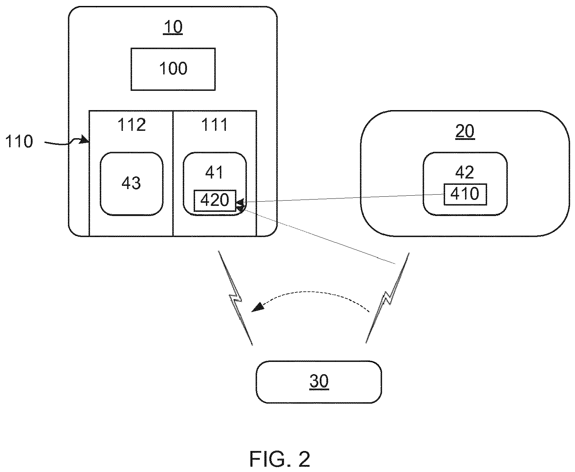

FIG. 2 is a diagram illustrating another example wireless system according to present disclosure. Referring to FIG.2, the network device 10 may further include a radio 110, and the processor 100 may further split the radio 110 of the network device 10 to include a first radio 111 operating on the first channel and a second radio 112 operating on a second channel.

For example, the network device may have a multiple-input multiple-output (MIMO) antenna system (not shown). The radio 110 of the network device 10 may provide a plurality of transmit and receive radio chains communicatively connected to the MIMO antenna system. The first radio 111 may include a subset of the plurality of transmit and receive radio chains, and the second radio 112 may include another subset of the plurality of transmit and receive radio chains.

The processor 100 may create the first wireless service 41 operating based on the first radio 111, and may create a third wireless service 43 operating on the second radio 112. The third wireless service 43 may be regarded as a primary service provided by the network device 10, and the first wireless service 41 may be regarded as a secondary service backup for the second network device 20. The second radio 112 may be the primary radio of the network device 10, and the first radio 111 may be the secondary radio of the network device 10. When the processor 100 splits the radio 110, the radio chains included in the second radio 112 may be more than the radio chains included in the first radio 111, in the case of the radio chains included in the first radio 11 being not less than radio chains of the client device 30.

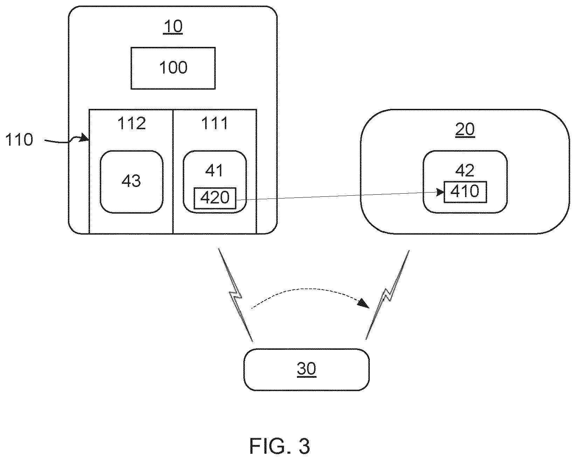

FIG. 3 is a diagram illustrating another example wireless system according to present disclosure. Referring to FIG. 3, when the unavailable second wireless service 42 provided by the second network device 20 is recovered to be available, the processor 100 may further cause the first network device 10 to suspend the first wireless service 41 provided to the client device 30, e.g. inactivate the backup wireless service 42 on the network device 10, in response to determining that the second wireless service provided by the second network device is available to the client device.. The second network device 20 may update the first information 410 corresponding to the second wireless service 42 based on the second information 420 on the first network device 10.

processor 100 may synchronize the information 40, e.g. a portion of the information 40 changed during the wireless service 42 being active (such as the state information), from the wireless service 42 on the network device 10 to the wireless service 41 on the second network device 20.

For example, the wireless service 42 may be the secondary service backup for the second network device 20, and the corresponding wireless service 41 may be the primary service of the second network device 20. When the wireless service 41 on the second network device 20 is active, the wireless service 41 may be preferential for the client device 30.

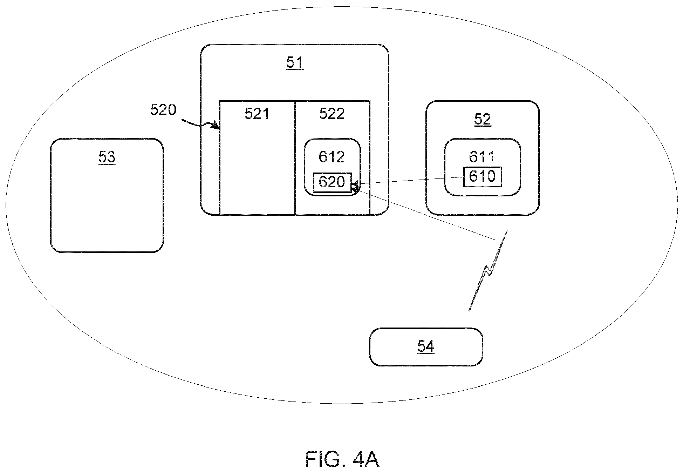

FIG. 4A to FIG. 4D are diagrams illustrating example cases of creating backup wireless service in the wireless system according to present disclosure. In the example cases of FIG. 4A to FIG. 4D, the wireless system may include three network devices 51, 52 and 53, e.g. APs, and the wireless service may be access service provided by VAP.

Referring to FIG. 4A, when an active VAP 611 is created on the network device 52, a client device 54 may access the active VAP 611 on its operating channel, and the network devices 51 and 53 may be candidate devices to create a backup VAP. The strength of signal that the network device 51 provides for the client device 54 is higher than the strength of signal provided by the network device 53, the network device 51 may be selected, e.g. by a control device (not shown), to create a backup VAP 612 for the active VAP 611 on the network device 52. The radio 520 of the network device 51 may be split into a primary radio 521 and a secondary radio 522, and the created backup VAP 612 may operate on the secondary radio 522. The network device 51 may update, based on the retrieved and monitored information 610 of the active VAP 611, the information 620 of the backup VAP 612.

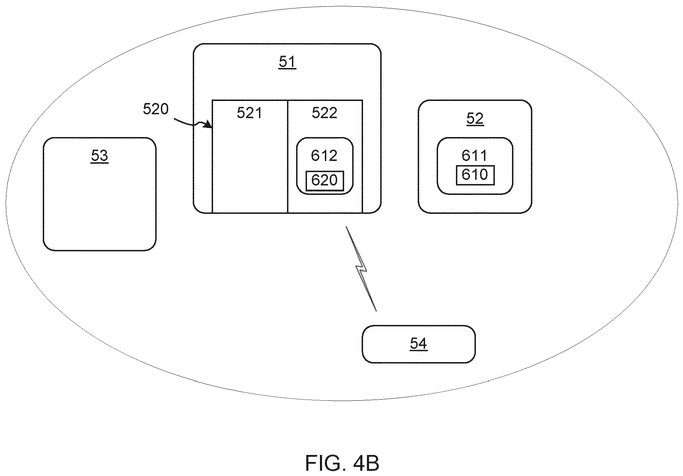

Referring to FIG. 4B, when the network device 52 detects the unavailable state of the VAP 611 on the network device 52, the backup VAP 612 may be activated to operate based on the secondary radio 522 of the network device 51, and the client device 54 may seamlessly switch from the VAP 611 on the network device 52 to the active VAP 612 on the network device 51.

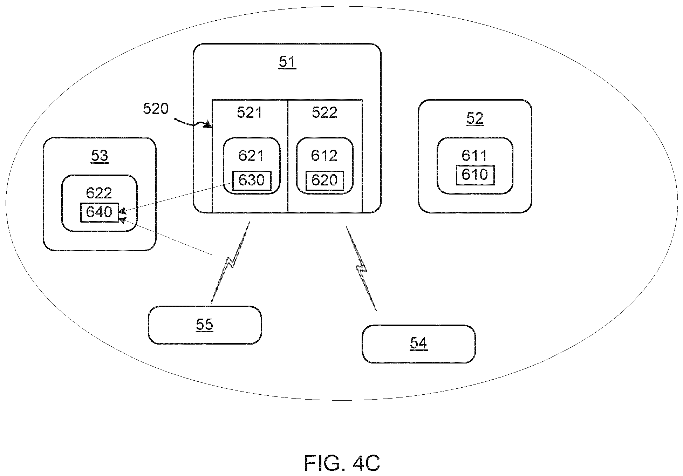

Referring to FIG. 4C, the network device 51 may create an active VAP 521 operating based on the primary radio 511, the client device 55 may access the active VAP 621 on the network device 51, and the network device 53 may be selected to create a backup VAP 622 corresponding to the VAP 621. The network device 53 may update, based on the retrieved and monitored information 630 of the active VAP 621, the information 640 of the backup VAP 622.

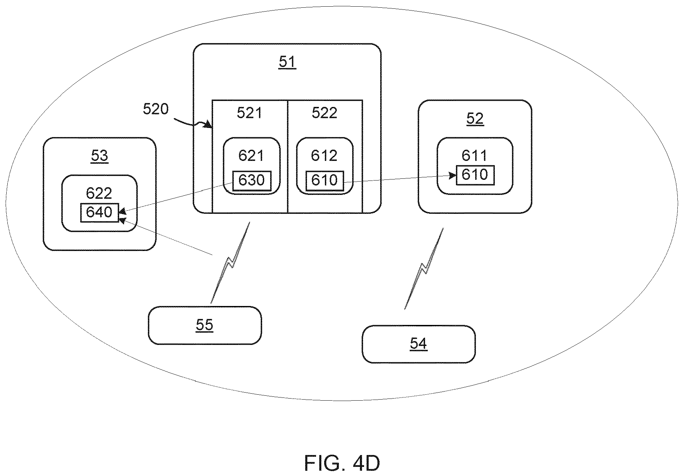

Referring to FIG. 4D, when the VAP 611 on the network device 52 is recovered to be active, the backup VAP 612 on the network device 51 may be inactivated, the network device 52 may update the information 610 of the VAP 611 based on the information 620 of the VAP 612, and the client device 54 may seamlessly switch back to the VAP 611 on the network device 52.

It can be understood based on the example cases, if an active VAP is created on the network device 53, the network device 51 may be also selected to further create a corresponding backup VAP besides the backup VAP 612, and the further created backup VAP may operate based on the primary radio 511 or the secondary radio 512.

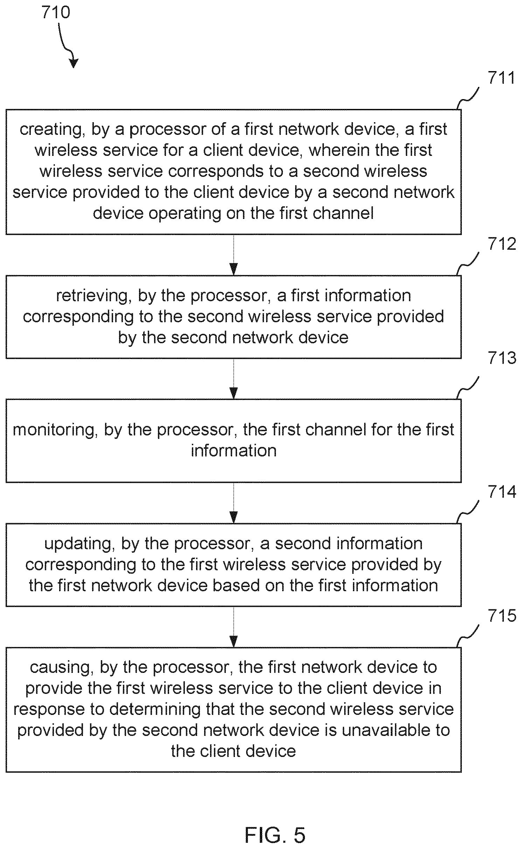

FIG. 5 is a flow chart illustrating an example method of creating a backup wireless service according to present disclosure. Referring to FIG. 5:

The method 710 may comprise: creating, by a processor of a first network device, a first wireless service for a client device, wherein the first wireless service corresponds to a second wireless service provided to the client device by a second network device operating on the first channel, at 711.

In some cases, the first wireless service may be a backup for the second wireless service.

The method 710 may comprise: retrieving, by the processor, a first information corresponding to the second wireless service provided by the second network device, at 712.

In some cases, the first information may include configuration information, association information and state information of the second wireless service, and may further include security association information of the second wireless service.

The method 710 may comprise: monitoring, by the processor, the first channel for the first information, at 713.

For example, monitoring the state information included in the first information of the second wireless service.

The method 710 may comprise: updating, by the processor, a second information corresponding to the first wireless service provided by the first network device based on the first information, at 714.

The method 710 may comprise: causing, by the processor, the first network device to provide the first wireless service to the client device in response to determining that the second wireless service provided by the second network device is unavailable to the client device, at 715.

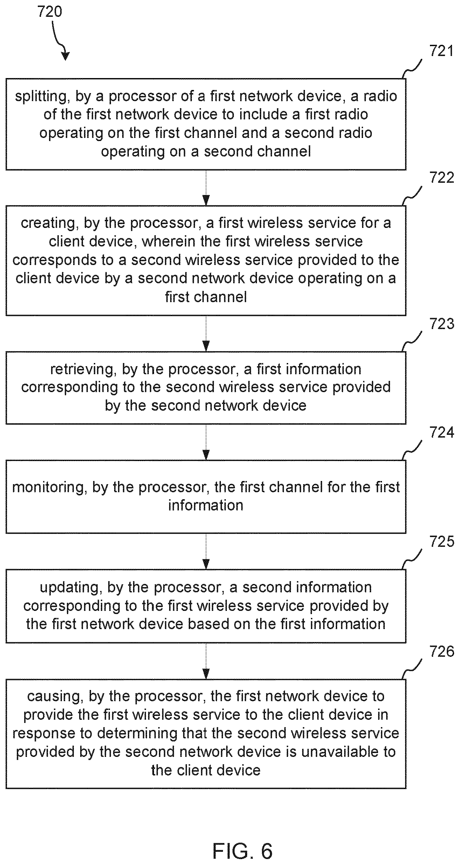

FIG. 6 is a flow chart illustrating another example method of creating a backup wireless service according to present disclosure. Referring to FIG. 6:

The method 720 may comprise: splitting, by a processor of a first network device, a radio of the first network device to include a first radio operating on the first channel and a second radio operating on a second channel, at 721.

In some cases, the number of radio chains included in the first radio may match the antenna capability of the client device utilizing the active wireless service on the second network device, and may be same with or different from the number of radio chains included in the second radio.

The method 720 may comprise: creating, by the processor, a first wireless service for a client device, wherein the first wireless service corresponds to a second wireless service provided to the client device by a second network device operating on a first channel, at 722.

The method 720 may comprise: retrieving, by the processor, a first information corresponding to the second wireless service provided by the second network device, at 723.

The method 720 may comprise: monitoring, by the processor, the first channel for the first information, at 724.

The method 720 may comprise: updating, by the processor, a second information corresponding to the first wireless service provided by the first network device based on the first information, at 725.

The method 720 may comprise: causing, by the processor, the first network device to provide the first wireless service to the client device in response to determining that the second wireless service provided by the second network device is unavailable to the client device, at 726.

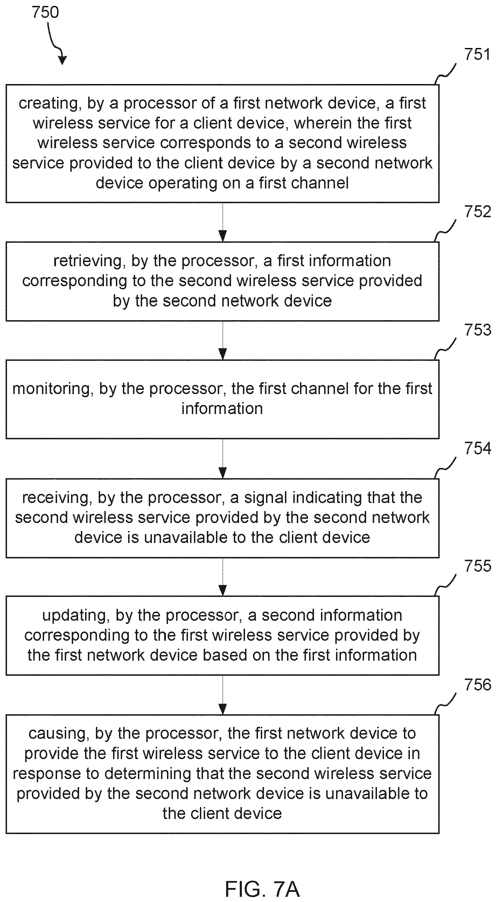

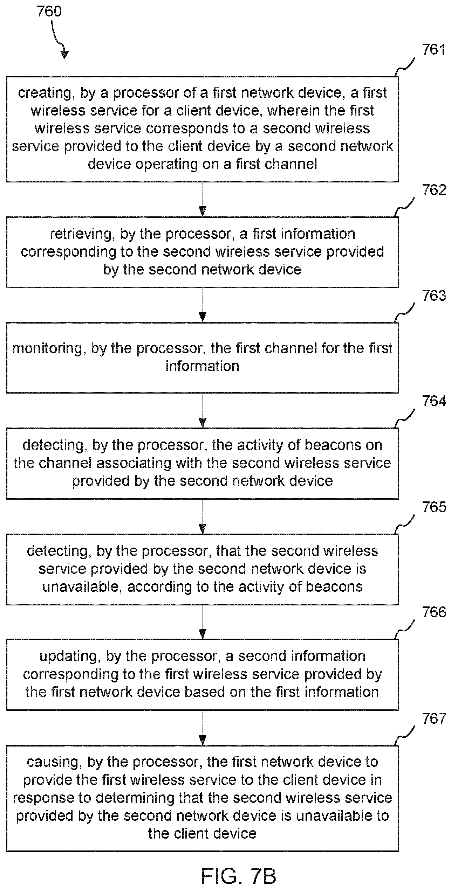

FIG. 7A and FIG. 7B are flow charts illustrating another example method of creating a backup wireless service according to present disclosure.

### Referring to FIG. 7A:

The method 750 may comprise: creating, by a processor of a first network device, a first wireless service for a client device, wherein the first wireless service corresponds to a second wireless service provided to the client device by a second network device operating on a first channel, at 751.

The method 750 may comprise: retrieving, by the processor, a first information corresponding to the second wireless service provided by the second network device, at 752.

The method 750 may comprise: monitoring, by the processor, the first channel for the first information, at 753.

For example, monitoring the state information included in the first information of the second wireless service.

The method 750 may comprise: receiving, by the processor, a signal indicating that the second wireless service provided by the second network device is unavailable to the client device, at 754.

The method 750 may comprise: updating, by the processor, a second information corresponding to the first wireless service provided by the first network device based on the first information, at 755.

The method 750 may comprise: causing, by the processor, the first network device to provide the first wireless service to the client device in response to determining that the second wireless service provided by the second network device is unavailable to the client device, at 756.

### Referring to FIG. 7B:

The method 760 may comprise: creating, by a processor of a first network device, a first wireless service for a client device, wherein the first wireless service corresponds to a second wireless service provided to the client device by a second network device operating on a first channel, at 761.

The method 760 may comprise: retrieving, by the processor, a first information corresponding to the second wireless service provided by the second network device, at 762.

The method 760 may comprise: monitoring, by the processor, the first channel for the first information, at 763.

For example, monitoring the state information included in the first information of the second wireless service.

The method 760 may comprise: detecting, by the processor, the activity of beacons on the channel associating with the second wireless service provided by the second network device, at 764.

The method 760 may comprise: detecting, by the processor, that the second wireless service provided by the second network device is unavailable, according to the activity of beacons, at 765.

The method 760 may comprise: updating, by the processor, a second information corresponding to the first wireless service provided by the first network device based on the first information, at 766.

The method 760 may comprise: causing, by the processor, the first network device to provide the first wireless service to the client device in response to determining that the second wireless service provided by the second network device is unavailable to the client device, at 767.

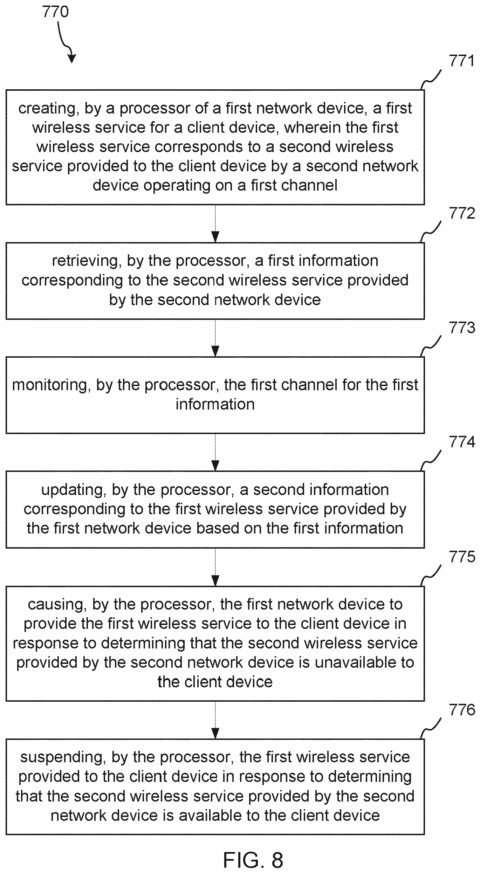

FIG. 8 is a flow chart illustrating another example method of creating a backup wireless service according to present disclosure. Referring to FIG. 8:

The method 770 may comprise: creating, by a processor of a first network device, a first wireless service for a client device, wherein the first wireless service corresponds to a second wireless service provided to the client device by a second network device operating on a first channel, at 771.

The method 770 may comprise: retrieving, by the processor, a first information corresponding to the second wireless service provided by the second network device, at 772.

The method 770 may comprise: monitoring, by the processor, the first channel for the first information, at 773.

For example, monitoring the state information included in the first information of the second wireless service.

The method 770 may comprise: updating, by the processor, a second information corresponding to the first wireless service provided by the first network device based on the first information, at 774.

The method 770 may comprise: causing, by the processor, the first network device to provide the first wireless service to the client device in response to determining that the second wireless service provided by the second network device is unavailable to the client device, at 775.

The method 770 may comprise: suspending, by the processor, the first wireless service provided to the client device in response to determining that the second wireless service provided by the second network device is available to the client device, at 776.

In some cases, the second network device may update the first information of the provided second wireless service, based on the second information after the method 770.

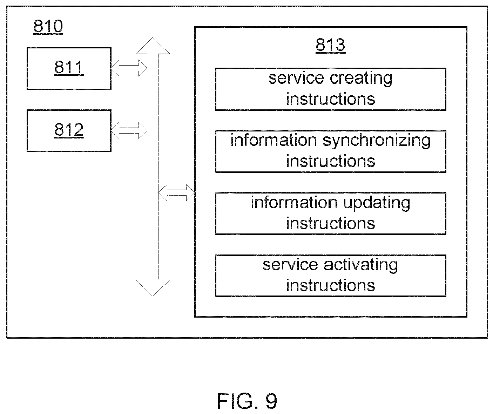

FIG. 9 is a block diagram illustrating an example network device according to present disclosure. Referring to FIG. 9, the network device 810 includes a radio 811, a processor 812 and a non-transitory computer readable storage medium 813.

The non-transitory computer readable storage medium 813 may store instructions executable for the possessor 812.

The instructions may include service creating instructions that, when executed by the processor 812, may cause the processor 812 to create a first wireless service for a client device, wherein the first wireless service corresponds to a second wireless service provided to the client device by a second network device operating on a first channel.

The instructions may include information retrieving instructions that, when executed by the processor 812, may cause the processor 812 to retrieve a first information corresponding to the second wireless service provided by the second network device.

The instructions may include information monitoring instructions that, when executed by the processor 812, may cause the processor 812 to monitor the first channel for the first information.

The instructions may include information updating instructions that, when executed by the processor 812, may cause the processor 812 to update a second information corresponding to the first wireless service provided by the first network device based on the first information.

The instructions may include service activating instructions that, when executed by the processor 812, may cause the processor 812 to cause the first network device to provide the first wireless service to the client device in response to determining that the second wireless service provided by the second network device is unavailable to the client device.

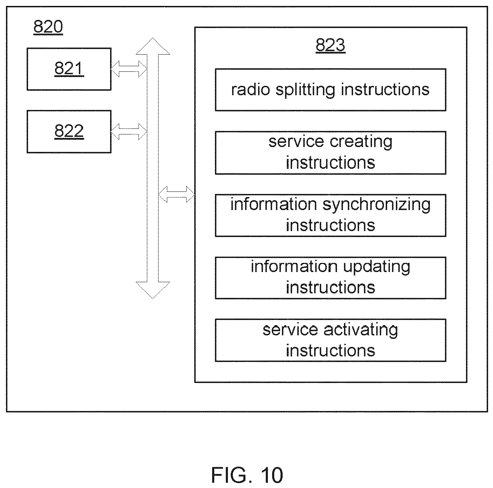

FIG. 10 is a block diagram illustrating another example network device according to present disclosure. Referring to FIG. 10, the network device 820 includes a radio 821, a processor 822 and a non-transitory computer readable storage medium 823.

The radio 821 may include a plurality of radio chains. The non-transitory computer readable storage medium 823 may store instructions executable for the possessor 822.

The instructions may include radio splitting instructions that, when executed by the processor 822, may cause the processor 822 to split the radio 821 of the first network device to include a first radio operating on the first channel and a second radio operating on a second channel.

The instructions may include service creating instructions that, when executed by the processor 822, may cause the processor 822 to create a first wireless service for a client device, wherein the first wireless service corresponds to a second wireless service provided to the client device by a second network device operating on the first channel.

The instructions may include information retrieving instructions that, when executed by the processor 822, may cause the processor 822 to retrieve a first information corresponding to the second wireless service provided by the second network device.

The instructions may include information monitoring instructions that, when executed by the processor 822, may cause the processor 822 to monitor the first channel for the first information.

The instructions may include information updating instructions that, when executed by the processor 822, may cause the processor 822 to update a second information corresponding to the first wireless service provided by the first network device based on the first information.

The instructions may include service activating instructions that, when executed by the processor 822, may cause the processor 822 to cause the first network device to provide the first wireless service to the client device in response to determining that the second wireless service provided by the second network device is unavailable to the client device.

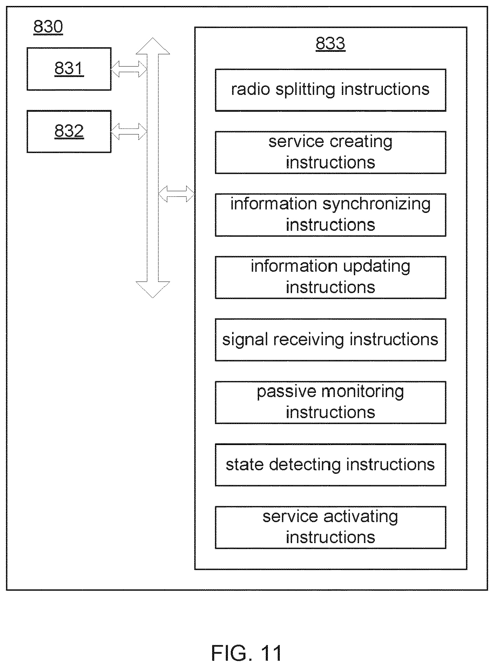

FIG. 11 is a block diagram illustrating another example network device according to present disclosure. Referring to FIG. 11, the network device 830 includes a radio 831, a processor 832 and a non-transitory computer readable storage medium 833.

The instructions may include service creating instructions that, when executed by the processor 832, may cause the processor 832 to create a first wireless service for a client device, wherein the first wireless service corresponds to a second wireless service provided to the client device by a second network device operating on a first channel.

The instructions may include information retrieving instructions that, when executed by the processor 832, may cause the processor 832 to retrieve a first information corresponding to the second wireless service provided by the second network device.

The instructions may include information monitoring instructions that, when executed by the processor 832, may cause the processor 832 to monitor the first channel for the first information.

The instructions may include state detecting instructions that, when executed by the processor 832, may cause the processor 832 to receive a signal indicating that the second wireless service provided by the second network device is unavailable to the client device, or may cause the processor 832 to detect the activity of beacons on the channel associating with the second wireless service provided by the second network device.

The instructions may include information updating instructions that, when executed by the processor 832, may cause the processor 832 to update a second information corresponding to the first wireless service provided by the first network device based on the first information.

The instructions may include service activating instructions that, when executed by the processor 832, may cause the processor 832 to cause the first network device to provide the first wireless service to the client device in response to determining that the second wireless service provided by the second network device is unavailable to the client device.

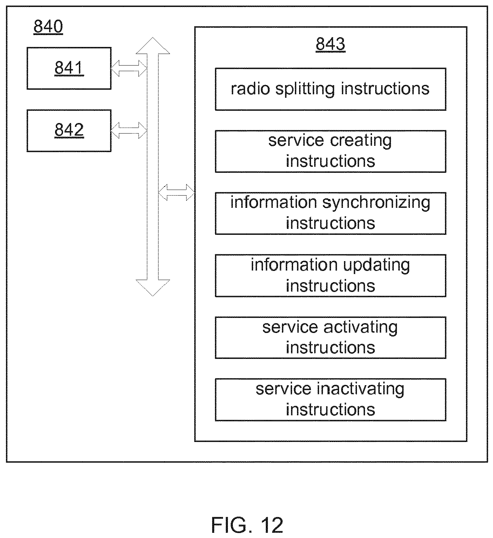

FIG. 12 is a block diagram illustrating another example network device according to present disclosure. Referring to FIG. 12, the network device 840 includes a radio 841, a processor 842 and a non-transitory computer readable storage medium 843.

The instructions may include service creating instructions that, when executed by the processor 842, may cause the processor 842 to create a first wireless service for a client device, wherein the first wireless service corresponds to a second wireless service provided to the client device by a second network device operating on a first channel.

The instructions may include information retrieving instructions that, when executed by the processor 842, may cause the processor 842 to retrieve a first information corresponding to the second wireless service provided by the second network device.

The instructions may include information monitoring instructions that, when executed by the processor 842, may cause the processor 842 to monitor the first channel for the first information.

The instructions may include information updating instructions that, when executed by the processor 842, may cause the processor 842 to update a second information corresponding to the first wireless service provided by the first network device based on the first information.

The instructions may include service activating instructions that, when executed by the processor 842, may cause the processor 842 to cause the first network device to provide the first wireless service to the client device in response to determining that the second wireless service provided by the second network device is unavailable to the client device.

The instructions may include service suspending instructions that, when executed by the processor 842, may cause the processor 842 to cause the first network device to suspend the first wireless service provided to the client device in response to determining that the second wireless service provided by the second network device is available to the client device.

While the present disclosure has been described in connection with certain example embodiments, it is to be understood that the disclosure is not limited to the disclosed embodiments, but, on the contrary, is intended to cover various modifications and equivalent arrangements included within the spirit and scope of the appended claims, and equivalents thereof.

## Claims

1. A first network device comprising a processor to:
create a first wireless service for a client device, wherein the first wireless service corresponds to a second wireless service provided to the client device by a second network device operating on a first channel;
retrieve a first information corresponding to the second wireless service provided by the second network device;
monitor the first channel for the first information;
update a second information corresponding to the first wireless service provided by the first network device based on the first information;
and
cause the first network device to provide the first wireless service to the client device in response to determining that the second wireless service provided by the second network device is unavailable to the client device.

2. The network device of claim 1, wherein the processor is further to:
split a radio of the first network device to include a first radio operating on the first channel and a second radio operating on a second channel.

3. The network device of claim 1, wherein the processor is further to:
receive a signal indicating that the second wireless service provided by the second network device is unavailable to the client device.

4. The network device of claim 1, wherein the processor is further to:
detect the activity of beacons on the channel associating with the second wireless service provided by the second network device.

5. The network device of claim 1, wherein the processor is further to:
cause the first network device to suspend the first wireless service provided to the client device in response to determining that the second wireless service provided by the second network device is available to the client device.

6. The network device of claim 1, wherein the first wireless service is a backup for the second wireless service.

7. The network device of claim 1, wherein the first and second wireless service comprise access services.

8. A method comprising:
creating, by a processor of a first network device, a first wireless service for a client device, wherein the first wireless service corresponds to a second wireless service provided to the client device by a second network device operating on a first channel;
retrieving, by the processor, a first information corresponding to the second wireless service provided by the second network device;
monitoring, by the processor, the first channel for the first information;
updating, by the processor, a second information corresponding to the first wireless service provided by the first network device based on the first information; and
causing, by the processor, the first network device to provide the first wireless service to the client device in response to determining that the second wireless service provided by the second network device is unavailable to the client device.

9. The method of claim 8, further comprising:
splitting, by the processor, a radio of the first network device to include a first radio operating on the first channel and a second radio operating on a second channel.

10. The method of claim 8, further comprising:
receiving, by the processor, a signal indicating that the second wireless service provided by the second network device is unavailable to the client device.

11. The method of claim 8, further comprising:
detecting, by the processor, the activity of beacons on the channel associating with the second wireless service provided by the second network device.

12. The method of claim 8, further comprising:
suspending, by the processor, the first wireless service provided to the client device in response to determining that the second wireless service provided by the second network device is available to the client device.

13. The method of claim 8, wherein the first wireless service is a backup for the second wireless service.

14. A non-transitory computer readable storage medium storing instructions that, when executed by a processor of a first network device, cause the processor to:
create a first wireless service for a client device, wherein the first wireless service corresponds to a second wireless service provided to the client device by a second network device operating on a first channel;
retrieve a first information corresponding to the second wireless service provided by the second network device;
monitor the first channel for the first information;
update a second information corresponding to the first wireless service provided by the first network device based on the first information; and
cause the first network device to provide the first wireless service to the client device in response to determining that the second wireless service provided by the second network device is unavailable to the client device.

15. The non-transitory computer readable storage medium of claim 14, wherein instructions that, when executed by the processor, further cause the processor to:
cause the first network device to suspend the first wireless service provided to the client device in response to determining that the second wireless service provided by the second network device is available to the client device.
